# EUROPÄISCHE PATENTSCHRIFT

(11) **EP 3 713 025 B1**
(45) Veröffentlichungstag und Bekanntmachung des Hinweises auf die Patenterteilung: **15.06.2022**
(21) Anmeldenummer: 19305333.7
(22) Anmeldetag: 19.03.2019
(51) Int. Cl.: H02G 3/22, H01R 13/00

(54) **LEITUNGSDURCHFÜHRUNG MIT RICHTUNGSGEBER**
LEAD FEEDTHROUGH WITH DIRECTION
PASSAGE DE CONDUITE DOTÉ D'UN DISPOSITIF INDICATEUR DE DIRECTION

(43) Veröffentlichungstag der Anmeldung: 23.09.2020
(73) Patentinhaber: Nexans, 92400 Courbevoie (FR)
(72) Erfinder: VÖLKL, Franz, 92696 Flossenbürg (DE); VÖLKL, Dietmar, 95703 Plössberg (DE); RIEDEL, Richard, 92685 Floß (DE); LANG, Rainer, 92697 Georgenberg (DE)
(74) Vertreter: Ipsilon

(56) Entgegenhaltungen:
- EP-A2- 1 182 063
- WO-A1-2005/124943
- DE-B3-102005 057 870
- US-A- 5 872 335
- US-A1- 2010 227 505
- US-A1- 2016 268 721

## Beschreibung

### Gebiet

Die Erfindung betrifft eine Leitungsdurchführung durch eine Ausnehmung in einer Wand, insbesondere zur Verwendung in Fahrzeugen.

### Hintergrund

Leitungsdurchführungen werden häufig zur Verlegung von Leitungen durch Ausnehmungen oder Öffnungen in Wänden verwendet, wenn ein einfaches Durchlegen der Leitungen nicht angezeigt ist, z.B. wenn die Leitung vor Beschädigung geschützt werden muss, oder die Ausnehmung und die Leitungsführung abgedichtet werden muss. Leitungsdurchführungen werden außerdem häufig verwendet, wenn die durch die Ausnehmung der Wand geführte Leitung auf einer oder beiden Seiten der Wand in eine bestimmte Richtung geführt werden soll.

Die Dichtfunktion sowie die gezielte Führung in einer bestimmten Richtung ist insbesondere in Fahrzeugen von großer Bedeutung, zum Beispiel wenn eine Leitung durch eine Spritzwand oder Schottwand geführt wird, die einen Feuchtraum von einem Trockenraum trennt, oder wenn eine Leitung in einem ansonsten gegenüber der Umgebung abgeschlossenen Raum geführt wird.

Aus der EP 0 014 538 A1 ist ein gummielastischer Dichtkörper für eine flüssigkeitsdichte Anordnung eines Kabels in einer Buchse oder einem Durchgangskanal beschrieben, der aus einer elastischen Hülse zum Aufschieben auf das Kabel mit in deren mittleren Bereich umfangsseitig konzentrisch und in axialer Richtung im Abstand ausgebildeten Ringen oder Flanschen zur elastischen Anordnung in der Buchse oder dem Durchgangskanal aufweist. Im Bereich neben den Ringen ist eine die Hülse umgreifenden Lasche zur festen Verbindung des Dichtkörpers mit dem Kabel angeordnet.

Die aus dem Stand der Technik bekannte Kabeldurchführung wird auf dem durch die Wand durchzuführenden Kabel vormontiert und anschließend in der Ausnehmung der Wand montiert. In Abhängigkeit von der Kabelführung beidseits der Wand und den zur Verfügung stehenden Raum für die Kabellegung kann es insbesondere bei der Montage dicker und wenig flexibler Kabel oder Kabelbäumen und einer mit diesem vormontierten Kabeldurchführung zu erheblichen Montageproblemen kommen. Außerdem kann sich bei einer Änderung der Richtung der Kabelführung mit kleinen Radien in unmittelbarer Nähe der Wanddurchführung der Dichtkörper aus der Ausnehmung der Wand lösen und die Dichtigkeit verloren gehen.

Aus der US 5,872,335 ist eine aus einem Gewinderohr mit einem mehr oder weniger mittig daran angeordneten Anschlagring bestehende Wanddurchführung bekannt, auf deren Gewinde ein Richtungsgeber aufschraubbar ist. Der Richtungsgeber weist ein klapp- oder schwenkbares Teil auf, welches in eine erste Position gebracht werden kann, in welcher ein Kabel gerade durch den Richtungsgeber hindurchgeführt werden kann, und in welcher der Richtungsgeber auf das Gewinde der Wanddurchführung aufschraubbar ist, ohne das Kabel dabei mitdrehen zu müssen. Dabei werden durch das Aufschrauben des Richtungsgebers Klemmfinger gegen das Kabel gedrückt, so dass das Kabel in Längsrichtung fixiert wird. In einer zweiten Position des Richtungsgebers wird das Kabel dann in einem Winkel von 90 Grad abgewinkelt. Die Wanddurchführung kann mit dem auf der anderen Seite des Anschlags liegenden Gewinde in einer Wand fixiert werden. Diese Kabeldurchführung erfordert das Aufschrauben des Richtungsgebers auf das Gewindestück oder das Einschrauben der Kombination aus Richtungsgeber und Gewindestück von der Seite der Wand aus, auf der das Kabel abgewinkelt geführt werden soll. Dies kann insbesondere in beengten Bauräumen schwierig oder unmöglich sein.

Hiervon ausgehend hat die vorliegende Erfindung die Aufgabe, eine Leitungsdurchführung zu schaffen, die eines oder mehrere der eingangs genannten Probleme zu überwindet oder zumindest verringert.

### Zusammenfassung der Erfindung

Zur Lösung dieser Aufgabe schlägt die Erfindung eine Leitungsdurchführung nach Anspruch 1 vor.

Im Kontext dieser Beschreibung liegt eine Durchführungsachse der Leitungsdurchführung parallel zu der Richtung, in der die Leitungsdurchführung von einer Seite der Wand in die Ausnehmung eingeführt oder durch diese hindurchgeführt wird. Im Kontext dieser Beschreibung schließt der Begriff "lagerbar" eine rotatorische oder translatorische Festlegung der Leitungsdurchführung um eine bzw. entlang einer Achse, aber auch eine rotatorische oder translatorische Festlegung um mehrere bzw. entlang mehrerer Achsen ein. So kann bspw. eine Verschiebung der in der Wand gelagerten Leitungsdurchführung entlang der Durchführungsachse be- oder verhindert sein, während eine Drehung um diese Achse möglich bleibt. Es ist aber auch möglich, die Leitungsdurchführung in einer bestimmten Position gegen eine Drehung um die Durchführungsachse zu fixieren.

Der Korpus weist eine erste und eine zweite Öffnung auf, durch welche hindurch eine oder mehrere Leitungen durch den Korpus kontaktierungsfrei hindurchführbar sind. An zumindest einer der Öffnungen sind Aufnahmemittel zur Aufnahme eines Richtungsgebers vorgesehen.

Das Innere des Korpus kann zur Führung einer oder mehrerer Leitungen eingerichtet sein, bspw. mittels Vertiefungen, in die Leitungen oder Leitungsbündel einlegbar sind.

Die Leitungsdurchführung weist Positionierungsmittel auf, welche eine Bewegung der im montierten Zustand in der Ausnehmung gelagerten Leitungsdurchführung in Durchführungsrichtung begrenzen. Die Positionierungsmittel können beispielsweise einen umlaufenden Ring oder einen oder mehrere Vorsprünge umfassen, die als Anschlag dienen und das Einschieben der Leitungsdurchführung in die Ausnehmung der Wand begrenzen. Die Positionierungsmittel, die das Einschieben der Leitungsdurchführung als Anschlag begrenzen, können auch durch einen gebogenen oder abgeknickten Teil des Korpus gebildet sein. Um das Herausziehen der Leitungsdurchführung aus der Ausnehmung zu be- oder verhindern können von den als Anschlag dienenden Positionierungsmitteln entfernt angeordnete Sperrmittel vorgesehen sein. Die Rastmittel sind vorzugsweise in einer Entfernung von den als Anschlag dienenden Positionierungsmitteln angeordnet, die gleich groß oder größer ist als die Dicke der Wand. Die Rastmittel können bspw. federnd gelagerte, mit dem Korpus bzw. dem Richtungsgeber verbundene Sperrklinken umfassen, die beim Einführen der Leitungsdurchführung in die Ausnehmung der Wand radial nach innen gedrückt werden und beim Austritt aus der Wand wieder in ihre ursprüngliche Lage zurückkehren. Anstelle der Rastmittel können zwei gegenüberliegende Nuten oder eine umlaufende Ringnut vorgesehen sein, welche einen Sperrbügel oder einen Sperrring aufnehmen. Zwei gegenüberliegende Nuten oder eine umlaufende Nut, die einen Sperrbügel oder einen Sperrring aufnehmen können auch anstelle des als Anschlag dienenden umlaufenden Rings bzw. der Vorsprünge vorgesehen sein.

Der Richtungsgeber weist ein Sockelteil und ein Dreh- oder schwenkbares Teil auf. Das Sockelteil weist Befestigungsmittel zur Befestigung an oder in dem Aufnahmemittel auf. Zusammen verbinden die Befestigungsmittel und die Aufnahmemittel den Richtungsgeber mit dem Korpus zumindest in einer Richtung fest, welche im Wesentlichen parallel zu der Durchführungsachse der Leitungsdurchführung durch die Ausnehmung liegt.

Die Befestigungsmittel des Sockelteils können Rastvorrichtungen umfassen, die in entsprechende Gegenstücke oder Aufnahmen des Korpus eingreifen und den Richtungsgeber mit dem Korpus verbinden. Alternative Befestigungsmittel können ein Gewinde am Sockelteil, das in ein entsprechendes Gewinde des Aufnahmemittels des Korpus eingreift umfassen, oder einen oder mehrere Vorsprünge am Sockelteil, die in eine Ringnut oder entsprechende Aussparungen des Aufnahmemittels des Korpus eingreifen, oder eine oder mehrere aneinander anliegende Flächen, die mittels Kleben oder Verschweißen miteinander verbindbar sind. Der Richtungsgeber kann in einer parallel zu der Durchführungsachse liegenden Richtung mit dem Korpus verbunden werden, bspw. wenn Rasthaken in entsprechende Aufnahmen einrasten, oder in einer quer zu der Durchführungsachse liegenden Richtung. In letzterem Fall kann der Richtungsgeber bspw. mit einem ganz oder teilweise am Fuß des Sockelteils umlaufenden Kragen seitlich in eine entsprechende Nut am Korpus eingeschoben werden. Die Verbindung von Richtungsgeber und Korpus kann demnach je nach Ausführung lösbar oder unlösbar sein. Eine Drehung des Sockelteils um eine im Wesentlichen parallel zu der Durchführungsachse verlaufende Achse in dem Aufnahmemittel kann möglich sein, aber auch durch entsprechende Mittel be- oder verhindert sein.

Das dreh- oder schwenkbare Teil des Richtungsgebers ist zwischen einer ersten, offenen und einer zweiten, geschlossenen Position dreh- oder schwenkbar. Das dreh- oder schwenkbare Teil des Richtungsgebers kann mit dem Sockelteil beispielsweise über ein Filmscharnier, ein Gelenk, einen Drehzapfen oder einen Drehring verbunden sein. Die Schwenk- oder Drehachse kann dabei von den Befestigungsmitteln beabstandet sein, bspw. an einem distalen Ende eines sich an die Befestigungsmittel anschießenden Wandteils.

Der Richtungsgeber bzw. das dreh- oder schwenkbare Teil des Richtungsgebers ragt zumindest in der offenen Position quer zu der Durchführungsachse an keinem Punkt über die äußeren Abmessungen des in der Ausnehmung einführ- und lagerbaren Teils des Korpus hinaus. Dies kann insbesondere dadurch erreicht werden, dass das dreh- oder schwenkbare Teil des Richtungsgebers in der offenen Position oder Montageposition in Richtung der Durchführungsachse weist. Dadurch kann die komplett montierte Leitungsdurchführung mit darin aufgenommenen Leitungen mit dem geöffnetem Richtungsgeber voran in die Ausnehmung der Wand eingeführt und gelagert werden, selbst wenn der Richtungsgeber in der geschlossenen Position quer zu der Durchführungsachse deutlich über die äußeren Abmessungen des in die Ausnehmung einführ- und lagerbaren Teils des Korpus hinausragt. Nach der Montage in der Wand kann der Richtungsgeber in die geschlossene Position gebracht werden, also aus der Richtung der Durchführungsachse herausgeschwenkt oder gedreht werden, wodurch den Leitungen nach dem Einbau eine exakte Richtung vorgebbar ist.

Das schwenk- oder drehbare Teil oder das Sockelteil des Richtungsgebers können Fixierungsmittel zur Fixierung des dreh- oder schwenkbaren Teils in der geschlossenen Position aufweisen. Die Mittel können beispielsweise eine oder mehrere Rastvorrichtungen umfassen, welche in entsprechende Gegenstücke oder Aufnahmen am Richtungsgeber oder am Korpus eingreifen und den dreh- oder schwenkbaren Teil des Richtungsgebers in der geschlossenen Position fixieren. Die Fixierung kann lösbar oder unlösbar sein.

Das Sockelteil des Richtungsgebers kann mit entsprechenden Mitteln des Korpus zusammenwirkende Festlegungsmittel aufweisen, die die Schwenk- oder Drehachse des schwenk- oder drehbaren Teils in Bezug auf den Korpus festlegen oder eine Veränderung der Schwenk- oder Drehachse begrenzen. Durch die Festlegungsmittel kann demnach eine Verdrehung von Richtungsgeber und Korpus gegeneinander begrenzt oder verhindert werden. Die Festlegungsmittel können bspw. eine mit einer Schiene oder Nocke im Korpus zusammenwirkende Nut im Sockelteil umfassen, aber auch durch die Lage von Rasthaken gebildet sein, welche den Richtungsgeber mit dem Korpus verbinden. In letzterem Fall kann vorgesehen sein, dass die mit den Rasthaken kooperierenden Teile nur in einer bestimmten Lage oder einem bestimmte Lagebereich von Richtungsgeber und Korpus so übereinstimmen, dass die Verbindung hergestellt werden kann. Die Anordnung von Schiene bzw. Nocke und Nut kann selbstverständlich auch umgekehrt erfolgen.

Bei einer oder mehreren Ausführungen weist die Leitungsdurchführung Positionierungsmittel auf, welche die Bewegung der Leitungsdurchführung in der Ausnehmung um die Durchführungsachse begrenzen oder verhindern.

Die Positionierungsmittel, welche eine rotatorische Bewegung der Leitungsdurchführung um eine zu der Durchführungsachse parallel liegende Achse verhindern oder begrenzen, können durch mit entsprechenden Aussparungen oder Vorsprüngen der Wand oder der Ausnehmung kooperierende Elemente des Korpus gebildet sein, bspw. durch einen Stift oder eine Nocke, der in eine entsprechende Aussparung der Wand eingreift. Diese Positionierungsmittel können aber auch durch einen nichtrotationssymmetrischen Querschnitt des in der Ausnehmung der Wand liegenden Teils des Korpus gebildet sein, bspw. durch einen ovalen, rechteckigen oder allgemein vieleckigen Querschnitt mit mehr als drei Kanten.

Zwischen der Wand und dem Positionierungsmittel und/oder dem in der Ausnehmung gelagerten Teil des Korpus können Dichtmittel vorgesehen sein, welche das Eindringen von Festkörpern und/oder Fluiden in den Zwischenraum be-oder verhindern. Die Dichtmittel können bspw. einen oder mehrere Dichtringe umfassen. Geeignete Dichtringe bestehen vorzugsweise aus einem dauerhaft elastischen Material, z.B. Gummi oder Silikon.

Im Innern des Korpus können ebenfalls Dichtmittel vorgesehen sein, welche den freibleibenden Raum zwischen der oder den durch den Korpus geführten Leitungen und der Innenseite des Korpus so ausfüllen und abdichten, dass der Durchgang von Festkörpern und/oder Fluiden durch den Korpus hindurch be- oder verhindert wird. Diese Dichtmittel bestehen vorzugsweise ebenfalls aus einem dauerhaft elastischen Material, z.B. flexiblen Gummi- oder Silikonteilen. Die Dichtmittel können nach dem Einbringen der Leitungen in das Innere des Korpus eingebracht werden, bspw. als flexible aushärtende Flüssigkeit, welche den zwischen der oder den Leitungen und dem Korpus verbleibenden Freiraum abdichtend ausfüllt.

Es ist aber auch möglich, dass die im Innern des Korpus angeordneten Dichtmittel vorgefertigt und mit vordefinierten Durchgangslöchern versehen sind, durch welche Leitungen hindurchführbar sind.

Der Korpus kann zwei gelenkig miteinander verbundene Teile umfassen, welche für das Einlegen der einen oder mehreren Leitungen bzw. eines eine oder mehrere Leitungen umschließenden Dichtmittels geöffnet sind. Das im Innern des Korpus angeordnete Dichtmittel kann dazu ebenfalls zweigeteilt oder aufklappbar sein. Die gelenkige Verbindung der Teile des Korpus kann beispielsweise durch ein Gelenk oder ein Scharnier, vorzugsweise ein Filmscharnier, gebildet sein. Nach dem Einlegen der einen oder mehreren Leitungen bzw. des eine oder mehrere Leitungen umschließenden Dichtmittels werden die gelenkig verbundenen Teile zusammengeklappt und miteinander fest oder lösbar verbunden. Die Verbindung kann beispielsweise mittels einer oder mehrerer Rastverbindungen erfolgen, durch Schrauben, Nieten, bspw. Kunststoff-Spreiznieten, durch Verkleben oder Verschweißen, aber auch durch umschließen mit einem Spannring oder Spannband.

An dem dem Richtungsgeber gegenüberliegenden Ende kann der Korpus zum Anbringen einer Kabelschutzvorrichtung, bspw. eines die Kabel oder Leitungen umhüllenden Wellrohres oder Kabelkanals eingerichtet sein.

Der Richtungsgeber kann ebenfalls zum Anbringen einer Kabelschutzvorrichtung eingerichtet sein. Hierzu kann insbesondere das dreh- oder schwenkbare Teil des Richtungsgebers mit Mitteln versehen sein, mit welchen die Kabelschutzvorrichtung verbindbar ist. Beispielsweise können an der Außenseite des von dem Sockelteil entfernt gelegenen Endes des schwenk- oder drehbaren Teils Rasthaken oder -nocken vorgesehen sein, welche in entsprechende Öffnungen oder Vertiefungen der Kabelschutzvorrichtung eingreifen und diese zumindest in eine Längsrichtung fixieren.

Die Kabelschutzvorrichtungen können eine Zugentlastung der Kabel umfassen.

Bei einer oder mehreren Ausführungen, bei der das dreh- oder schwenkbare Teil in der geschlossenen Position verriegelt ist, wird durch die Verriegelung des dreh- oder schwenkbaren Teils ein Positionierungsmittel betätigt, welches das Herausziehen der Leitungsdurchführung aus der Ausnehmung in der Wand be- oder verhindert. Beispielsweise können bei oder durch die Verriegelung des dreh- oder schwenkbaren Teils Stege oder Platten des Korpus oder des Sockelteils des Richtungsgebers radial nach außen gedrückt werden, so dass sie über den äußeren Umfang des in der Ausnehmung gelagerten Teils des Korpus nach außen ragen und ein Herausziehen der Leitungsdurchführung aus der Ausnehmung verhindern.

Die Zweiteilung der Leitungsdurchführung in einen Korpus und einen Richtungsgeber erlaubt es den Korpus und den Richtungsgeber aus Materialien mit unterschiedlichen Eigenschaften herzustellen. Beispielsweise kann der Korpus aus einem Material mit größerer Härte bzw. geringerer Elastizität gefertigt sein, wohingegen der Richtungsgeber aus einem flexibleren Material gefertigt ist. Die Verwendung eines flexibleren Materials erlaubt es, den Richtungsgeber einteilig herzustellen und beispielsweise über ein Filmscharnier trotzdem eine definierte Schwenkbewegung zu ermöglichen. Ein beispielhaftes Material größerer Härte ist beispielsweise glasfaserverstärktes Polyamid. Ein demgegenüber flexibleres Material ist beispielsweise schlagzäh modifiziertes Polyamid. Andere thermoplastische Werkstoffe sind selbstverständlich ebenfalls verwendbar.

Außerdem ermöglicht die Zweiteilung der Leitungsdurchführung in einen Korpus und einen Richtungsgeber eine beliebige Zusammenstellung unterschiedlicher Korpusse und Richtungsgeber. So können beispielsweise auf einen Korpus unterschiedliche Richtungsgeber montiert werden, welche durch die Leitungsdurchführung geführte Leitungen auf der richtungsgeberseitigen Seite in unterschiedliche Richtungen ablenken.

Unabhängig von der jeweiligen Kombination von Korpus und Richtungsgeber wird Kabeln oder Leitungen nach dem Einbau der Leitung Durchführung in eine Wand stets eine exakte Richtung vorgegeben.

Dadurch, dass das dreh- oder schwenkbare Teil des Richtungsgebers während der Montage in einer offenen Position vorliegt und so nicht über die äußeren Abmessungen der Ausnehmung in der Wand hinausragt, kann dieser Teil nahezu beliebig lang ausgeführt sein. Erst nach dem Verbringen des dreh- oder schwenkbaren Teils in die geschlossene Position weisen durch die Ausnehmung der Wand hindurchgeführte Teile der Leitungsdurchführung Abmessungen auf, welche größer sind als die die Öffnung der Ausnehmung der Wand.

Die Ausstattung der Leitungsdurchführung mit Positionierungsmitteln ermöglicht bei einigen Ausführungen einen Einbau ohne Verwendung eines Konterteils auf der gegenüberliegenden Seite.

Durch die Vormontage des Richtungsgebers auf dem Korpus ist ein nachträgliches Einbringen einer Kappe auf der der Montageseite der Leitungsdurchführung gegenüberliegenden Seite nicht notwendig, was vor allem in engen Bauräumen umständlich sein kann.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine beispielhafte Darstellung von Korpus und Richtungsgeber der erfindungsgemäßen Leitungsdurchführung in nicht verbundenem Zustand,
- Fig. 2: eine beispielhafte Darstellung von Korpus und offenem Richtungsgeber der erfindungsgemäßen Leitungsdurchführung in verbundenem Zustand,
- Fig. 3: eine beispielhafte Darstellung von Korpus und geschlossenem Richtungsgeber der erfindungsgemäßen Leitungsdurchführung in verbundenem Zustand,
- Fig. 4: eine weitere beispielhafte Darstellung eines Korpus der erfindungsgemäßen Leitungsdurchführung in einer anderen Ansicht,
- Fig. 5: eine weitere beispielhafte Darstellung von Korpus und offenem Richtungsgeber der erfindungsgemäßen Leitungsdurchführung in verbundenem Zustand, und
- Fig. 6: eine beispielhafte Darstellung eines Kabelbaums mit einer erfindungsgemäßen Leitungsdurchführung.

Gleiche oder ähnliche Elemente sind in den Figuren mit gleichen oder ähnlichen Bezugszeichen versehen.

### Ausführungsbeispiel

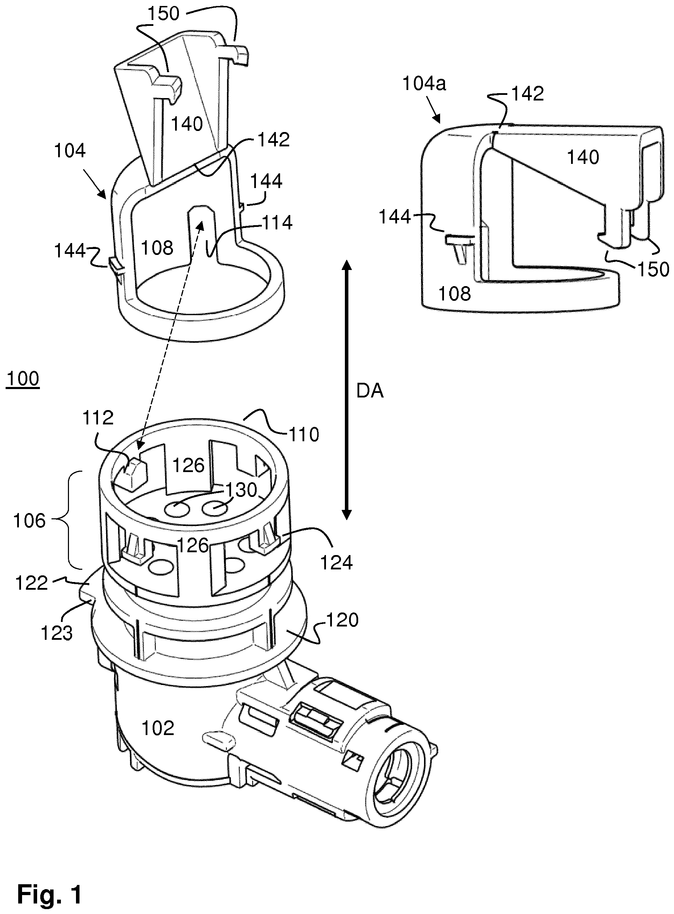

Figur 1 zeigt eine beispielhafte Darstellung von Korpus 102 und Richtungsgeber 104 der erfindungsgemäßen Leitungsdurchführung 100 in nicht verbundenem Zustand. Der Richtungsgeber 104 ist zum besseren Verständnis der Erfindung in der Figur jeweils einmal in geöffnetem und geschlossenem Zustand gezeigt. Der Korpus weist ein Aufnahmemittel 106 zur Aufnahme eines Sockelteils 108 des Richtungsgebers 104 auf. Das Aufnahmemittel 106 ist in dem in der Figur gezeigten Beispiel ein Teil des Korpus 102 mit einem ringförmig umlaufenden Rand 110. An dem Rand 110 ist eine Führungsnocke 112 angeordnet, die zur Festlegung der Position des Richtungsgebers 104 dient. Richtungsgeber 104 weist eine mit der Führungsnocke 112 korrespondierende Kerbe 114 auf. Die Korrespondenz von Führungsnocke 112 und Kerbe 114 ist durch den gestrichelten Pfeil zwischen den Teilen verdeutlicht. Beim Zusammenbau von Korpus 102 und Richtungsgeber 104 muss die Kerbe 114 so ausgerichtet sein, dass sie die Führungsnocke 112 aufnehmen kann. Die Führungsnocke 112 kann auch an anderer Stelle des Korpus angebracht sein. Es kommt lediglich darauf an, dass sie während des Zusammenbaus die Positionierung der Teile zueinander ermöglicht.

Korpus 102 weist außerdem Positionierungsmittel auf, welche eine Begrenzung der Bewegung der Leitungsdurchführung 100 in der Ausnehmung der Wand (nicht in der Figur gezeigt) entlang einer Durchführungsachse DA bewirken. Die Durchführungsachse DA wird in der Figur durch den mit DA bezeichneten Doppelpfeil dargestellt. Die Positionierungsmittel werden in dem in der Figur Beispiel von einem außen um den Korpus umlaufenden Ring 120 gebildet. Bei der Montage der Leitungsdurchführung 100 in eine Ausnehmung einer Wand wird der Korpus in die Ausnehmung eingeschoben, bis der Ring 120 an der Wand anliegt. An dem als außen umlaufender Ring ausgeführten Positionierungsmittel ist außerdem ein aus dem Ring hervorstehender Bereich 122 geformt, welcher zur Festlegung der Einbaulage der Leitungsdurchführung 100 in Bezug auf die Ausnehmung in der Wand dienen kann. Dazu kann an der Wand ein mit die Kehle 123 korrespondierendes Anschlagelement vorgesehen sein, bspw. ein umgebogener Teil der Ausnehmung oder ein in die Wand eingelassener Stift (nicht in der Figur gezeigt). Ein entsprechendes Element kann auf der in der Figur nicht sichtbaren anderen Seite des hervorstehenden Bereichs 122 vorgesehen sein. Wenn der hervorstehende Bereich 122 des Rings 120 zwischen zwei Anschlagelementen gelagert ist, ist eine Drehbewegung der Leitungsdurchführung 100 begrenzt oder verhindert.

Korpus 102 weist außerdem weitere Positionierungsmittel auf, welche ein Herausziehen der in der Ausnehmung gelagerten Leitungsdurchführung nach der Montage be- oder verhindern. Die weiteren Positionierungsmittel sind in dem in der Figur gezeigten Beispiel durch die Rasthaken 124 gebildet. Die Rasthaken 124 sind an dem ringförmig umlaufenden Rand 110 angeordnet und können radial nach innen einfedern. Die Beweglichkeit der Rasthaken 124 wird unter anderem durch eine Torsion des jeweiligen Randsegments zwischen den den ringförmig umlaufenden Rand 110 tragenden Pfosten 126 gewährleistet. Die Rasthaken 124 weisen eine Form auf, welche das Einfedern der Rasthaken 124 beim Einführen in die Ausnehmung begünstigen. Wenn die Rasthaken 124 wieder aus der Ausnehmung heraustreten federn sie zurück in die Ausgangsposition. Die Form der Rasthaken 124 verhindert eine Rückwärtsbewegung der Leitungsdurchführung 100 in der Ausnehmung, solange die Rasthaken 124 nicht radial nach innen gedrückt werden.

Der in der Figur beispielhaft gezeigte Korpus 102 weist eine abgewinkelte Form auf, so dass die durch den Korpus 102 hindurchgeführten Leitungen (nicht in der Figur gezeigt) auf der Seite der Wand, von der die Leitungsdurchführung 100 in die Ausnehmung eingeführt wird, parallel zu der Wand verlaufen. Andere Formen des Korpus sind ebenfalls vorstellbar, bspw. können Leitungen gerade in den Korpus hineingeführt sein.

Auf der nach oben weisenden Seite des Korpus 100 sind Öffnungen 130 erkennbar, durch welche jeweils einzelne Leitungen hindurchführbar sind.

Der in der Figur direkt oberhalb des Korpus 102 gezeigte Richtungsgeber 104 weist ein Sockelteil 108 und ein schwenkbares Teil 140 auf. Sockelteil 108 und schwenkbares Teil 140 sind bspw. mit einem Folienscharnier 142 miteinander schwenkbar verbunden. An dem Sockelteil 108 sind zwei Rasthaken 144 angeordnet, welche im montierten Zustand von Richtungsgeber und Korpus unter dem ringförmig umlaufenden Rand 110 liegen und an der Unterseite des ringförmig umlaufenden Rands 110 einrasten. Damit sind Korpus 102 und Richtungsgeber 104 fest miteinander verbunden. Da die Führungsnocke 112 in der Kerbe 114 liegt, ist auch eine relative Drehbewegung von Korpus 102 und Richtungsgeber 104 gegeneinander verhindert. Ein vergleichbarer Effekt kann auch durch eine geeignete Positionierung der Rasthaken 146 zu den den ringförmig umlaufenden Rand 110 tragenden Pfosten 126 oder zu den Rasthaken 124 erreicht werden, wenn einer oder mehrere der Rasthaken 146 so an oder zwischen den Pfosten 126 oder den Rasthaken 124 liegen, dass sie eine Drehbewegung verhindern.

Das schwenkbare Teil 140 des Richtungsgebers 104 weist an seinem äußeren Ende zwei Rasthaken 150 auf, welche im montierten Zustand von außen über den ringförmig umlaufenden Rand 110 greifen und darunter einrasten. Der in der Figur rechts oberhalb des Korpus 102 abgebildete Richtungsgeber 104a verdeutlicht die Funktion des Richtungsgebers.

Das schwenkbare Teil 140 des Richtungsgebers 104 ist in dem in der Figur gezeigten Beispiel rinnenförmig ausgeführt. Aus dem Korpus 102 austretende Kabel oder Leitungen können innerhalb der Rinne geführt werden und sind bei geschlossenem schwenkbaren Teil 140 des Richtungsgebers 104 zwischen der Oberkante des ringförmig umlaufenden Rands 110 und der Rinne eingeschlossen. Es ist alternativ auch möglich, das schwenkbare Teil 140 des Richtungsgebers 104 flach oder konvex auszuführen, bspw. wenn einige oder alle der aus dem Korpus austretenden Kabel oder Leitungen parallel zu der Schwenkachse von der Leitungsdurchführung 100 weggeführt werden sollen.

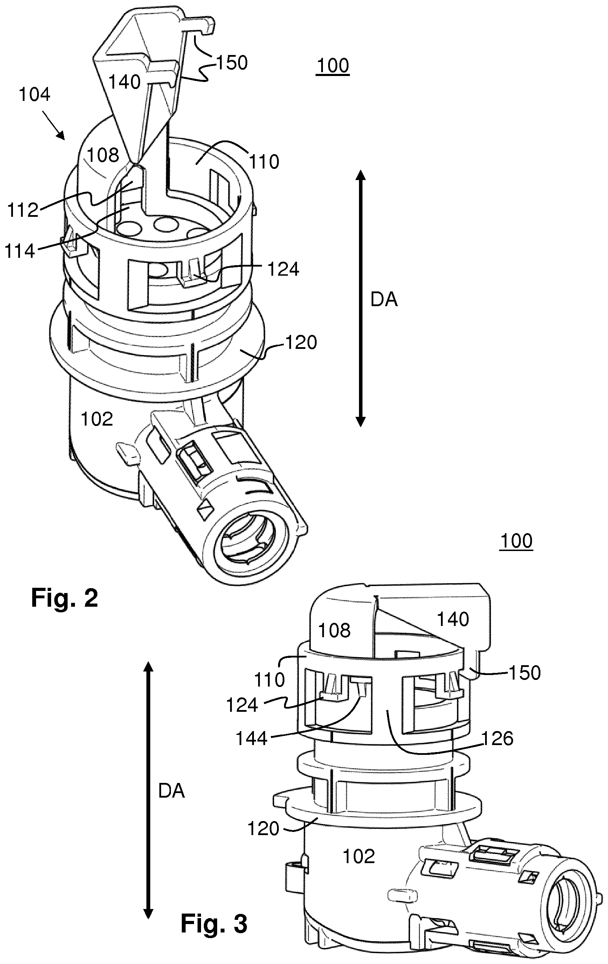

Figur 2 zeigt die Leitungsdurchführung 100 in zusammengebautem Zustand mit geöffnetem schwenkbaren Teil 140. Deutlich erkennbar ist die Lagerung des Sockelteils 108 innerhalb des ringförmig umlaufenden Rands 110. Ebenfalls erkennbar ist die Lage der Führungsnocke 112 in der Kerbe 114.

Figur 3 zeigt ebenfalls die Leitungsdurchführung 100 in zusammengebautem Zustand, diesmal mit geschlossenem schwenkbaren Teil 140. In dieser Ansicht ist die Position eines der Rasthaken 144 des Sockelteils 108 zwischen einem der Rasthaken 124 und einem der Pfosten 126 des Korpus deutlich erkennbar.

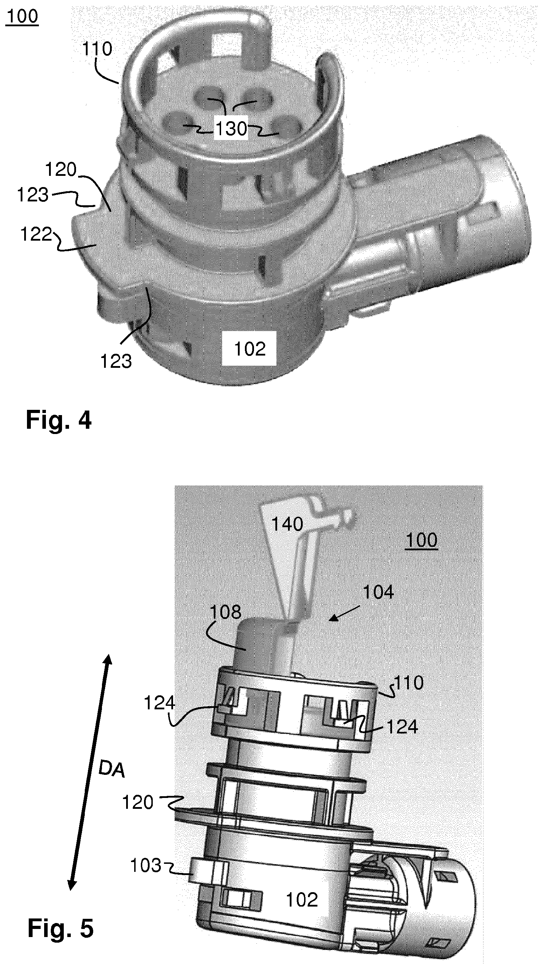

Figur 4 zeigt eine weitere beispielhafte Darstellung eines Korpus 102 der erfindungsgemäßen Leitungsdurchführung 100 in einer anderen Ansicht. In dieser Ansicht ist der vorspringende Bereich 122 an dem Ring 120 mit den zwei Kehlen 123 zur Lagefixierung der Leitungsdurchführung gut zu erkennen. Ebenfalls gut zu erkennen sind die Öffnungen 130 für die durch den Korpus 102 hindurchzuführenden Leitungen.

Figur 5 zeigt eine weitere beispielhafte Darstellung von Korpus 102 und offenem Richtungsgeber 104 der erfindungsgemäßen Leitungsdurchführung 100 in verbundenem Zustand. In dieser Ansicht ist die Zweiteilung des Korpus 102 sowie das die zwei Teile verbindende Scharnier 103 gut zu erkennen.

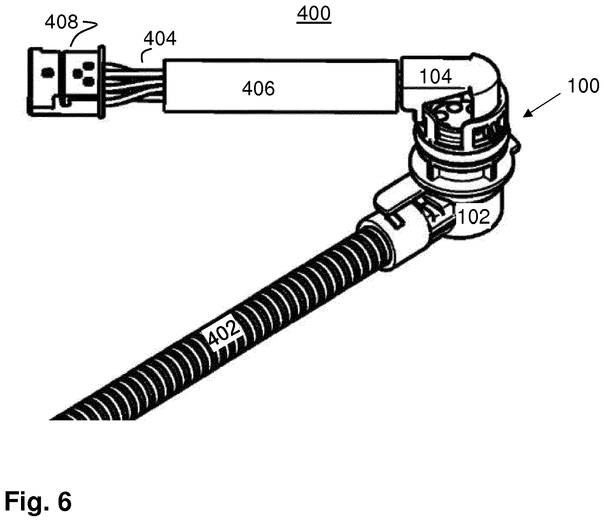

Figur 6 zeigt eine beispielhafte Darstellung eines Kabelbaums 400 mit einer erfindungsgemäßen Leitungsdurchführung 100. An einem dem Richtungsgeber 104 gegenüberliegenden Ende des Korpus 102 ist ein Wellrohr 402 befestigt, innerhalb dessen mehrere Leitungen 404 verlaufen. Die Leitungen sind in der weiter oben beschriebenen Weise durch den Korpus 102 der Leitungsdurchführung 100 hindurchgeführt und durch den Richtungsgeber 104 in eine festgelegte Richtung abgelenkt. Am Richtungsgeber 104 ist eine weitere Schutzeinrichtung 406 für die Leitungen 404 angeordnet, in deren Innern die Leitungen 404 verlaufen. Am Ende der Schutzeinrichtung 406 sind die Leitungen 404 einem Stecker 408 zugeführt und dort terminiert. In der Figur ist gut erkennbar dargestellt, wie die Leitungen an jeder Seite der Leitungsdurchführung 100 in unterschiedlichen Richtungen im Wesentlichen parallel zu der in der Figur nicht gezeigten Wand verlaufen.

### Bezugszeichenliste

- 100: Leitungsdurchführung
- 102: Korpus
- 103: Scharnier
- 104: Richtungsgeber
- 106: Aufnahmemittel
- 108: Sockelteil
- 110: Rand
- 112: Führungsnocke
- 114: Kerbe
- DA: Durchführungsachse
- 120: Ring
- 122: vorspringender Bereich
- 123: Kehle
- 124: Rasthaken
- 126: Pfosten
- 130: Öffnung für Leitung
- 140: schwenkbares Teil
- 142: Folienscharnier
- 144: Rasthaken
- 150: Rasthaken
- 400: Kabelbaum
- 402: Wellrohr
- 404: Leitung
- 406: Schutzeinrichtung für Leitungen
- 408: Stecker

## Patentansprüche

1. Leitungsdurchführung (100) zum Durchführen von Leitungen durch eine Ausnehmung einer Wand, umfassend:
- einen in die Ausnehmung einführ- und darin lagerbaren Korpus (102), der eine erste und eine zweite Öffnung aufweist, wobei eine oder mehrere Leitungen über die erste und zweite Öffnung durch den Korpus (102) hindurchführbar sind, und wobei zumindest an einer der ersten und/oder zweiten Öffnungen Aufnahmemittel (106) zur Aufnahme eines Richtungsgebers (104) vorgesehen sind, wobei Positionierungsmittel (120) vorgesehen sind, welche eine Bewegung der im montierten Zustand in der Ausnehmung gelagerten Leitungsdurchführung (100) in Durchführungsrichtung begrenzen, und
- einen Richtungsgeber (104) mit einem Sockelteil (108) und einem dreh- oder schwenkbaren Teil (140), der durch den Korpus (102) hindurchgeführte Leitungen in eine festgelegte Richtung ablenkt, wobei das Sockelteil (108) Befestigungsmittel (144) zur Befestigung an oder in dem Aufnahmemittel (106) aufweist, welche den Richtungsgeber (104) mit dem Korpus (102) zumindest in einer Richtung fest verbinden, die einer Durchführungsachse (DA) der Leitungsdurchführung (100) durch die Ausnehmung entspricht,
wobei das dreh- oder schwenkbare Teil (140) des Richtungsgebers (104) zwischen einer ersten und einer zweiten Position dreh- oder schwenkbar ist, wobei der Richtungsgeber (104) zumindest in der ersten Position quer zu der Durchführungsachse (DA) an keinem Punkt über die äußeren Abmessungen des in die Ausnehmung einführ- und lagerbaren Teils des Korpus (102) hinausragt, so dass er in Einführrichtung vor dem Korpus liegend in die Ausnehmung ein- und durch die Wand hindurchführbar ist, bis die Positionierungsmittel (120) eine weitere Bewegung in Durchführungsrichtung begrenzen, und wobei das dreh- oder schwenkbare Teil (140) oder das Sockelteil (108) des Richtungsgebers (104) Mittel (150) zur Fixierung des dreh- oder schwenkbaren Teils (140) in der zweiten Position aufweisen.

2. Leitungsdurchführung (100) nach Anspruch 1, mit Positionierungsmitteln (120, 122, 123, 124) zur Begrenzung oder Verhinderung einer Bewegung der im montierten Zustand in der Ausnehmung gelagerten Leitungsdurchführung (100) um die Durchführungsachse (DA).

3. Leitungsdurchführung (100) nach Anspruch 1, wobei das Sockelteil (108) und/oder das dreh- oder schwenkbare Teil (140) des Richtungsgebers (104) miteinander kooperierende Festlegungsmittel (112, 114) zur Festlegung der Schwenk- oder Drehachse in Bezug auf den Korpus (102) aufweisen.

4. Leitungsdurchführung (100) nach Anspruch 1, wobei im Innern des Korpus (102) Dichtmittel vorgesehen sind, welche den freibleibenden Raum zwischen der oder den durch den Korpus (102) geführten Leitungen (404) und der Innenseite des Korpus (102) so ausfüllen und abdichten, dass der Durchgang von Festkörpern und/oder Fluiden durch den Korpus (102) hindurch be- oder verhindert wird.

5. Leitungsdurchführung (100) nach Anspruch 1, wobei zwischen Wand und Positionierungsmittel (120, 122, 123, 124) und/oder dem in der Ausnehmung der Wand gelagerten Teil des Korpus (102) Dichtmittel vorgesehen sind, welche das Eindringen von Festkörpern und/oder Fluiden in den Zwischenraum be- oder verhindern.

6. Leitungsdurchführung (100) nach Anspruch 1, wobei der Korpus (102) an einem dem Richtungsgeber (104) gegenüberliegenden Ende zum Anbringen einer Kabelschutzvorrichtung (402) eingerichtet ist.

7. Leitungsdurchführung (100) nach Anspruch 1, wobei der Richtungsgeber (104) an einem vom dem Sockelteil (108) entfernten gelegenen Ende zum Anbringen einer Kabelschutzvorrichtung (406) eingerichtet ist.

8. Leitungsdurchführung (100) nach Anspruch 1, wobei der Korpus (102) zwei gelenkig miteinander verbundene Teile umfasst, welche in einen geöffneten Zustand zum Einlegen von Leitungen (404) und einen geschlossenen Zustand zur Montage in der Ausnehmung der Wand gebracht werden können.

9. Kabelbaum (400) mit einer Leitungsdurchführung (100) nach einem oder mehreren der vorhergehenden Ansprüche.

## Claims

1. A line feedthrough (100) for feeding lines through a recess of a wall comprising
- a body (102) that can be inserted and stored therein, which has a first and a second opening, wherein one or more lines can be fed through the body (102) via the first and second opening, and wherein receiving means (106) for receiving a direction indicator (104) are provided at least at one of the first and/or second openings, wherein positioning means (120) are provided, which limit a movement of the line feedthrough (100) stored in the mounted state in the recess in the feedthrough direction, and
- a direction indicator (104) with a base part (108) and a rotatable or pivotable part (140), which deflects lines fed through the body (102) in a specified direction, wherein the base part (108) has fastening means (144) for fastening on or in the receiving means (106), which firmly connect the direction indicator (104) to the body (102) at least in one direction, which corresponds to the feedthrough axis (DA) of the line feedthrough (100) through the recess,
wherein the rotatable or pivotable part (140) of the direction indicator (104) is rotatable or pivotable between a first and a second position, wherein the direction indicator (104) does not protrude at least in the first position transversely to the feedthrough axis (DA) at any point beyond the dimensions of the part of the body (102) that can be inserted and stored in the recess, so that it can be inserted into the recess lying in front of the body in the insertion direction and can be fed through the wall, until the positioning means (120) limit a further movement in the feedthrough direction, and wherein the rotatable or pivotable part (140) or the base part (108) of the direction indicator (104) have means (150) for fixing the rotatable or pivotable part (140) in the second position.

2. The line feedthrough (100) according to claim 1, having positioning means (120, 122, 123, 124) for limiting or preventing a movement of the line feedthrough (100) stored in the mounted state in the recess about the feedthrough axis (DA).

3. The line feedthrough (100) according to claim 1, wherein the base part (108), and/or the rotatable or pivotable part (140) of the direction indicator (104) have mutually cooperating fixing means (112, 114) for fixing the pivot or rotation axis in relation to the body (102).

4. The line feedthrough (100) according to claim 1, wherein sealing means are provided inside the body (102), which fill and seal the free space between the line or lines (404) fed through the body (102) and the inside of the body (102), so that the passage of solids and/or fluids through the body (102) is impeded or prevented.

5. The line feedthrough (100) according to claim 1, wherein sealing means are provided between the wall and positioning means (120, 122, 123, 124) and/or the part of the body (102) stored in the recess of the wall, which sealing means impede or prevent the penetration of solids and/or fluids into the intermediate space.

6. The line feedthrough (100) according to claim 1, wherein the body (102) is adapted for attachment of a cable protection device (402) at an end opposite the direction indicator (104).

7. The line feedthrough (100) according to claim 1, wherein the direction indicator (104) is adapted for attachment of a cable protection device (406) at an end remote from the base part (108).

8. The line feedthrough (100) according to claim 1, wherein the body (102) comprises two parts connected to one another in an articulated manner, which can be brought into an open state for the insertion of lines (404) and into a closed state for mounting in the recess of the wall.

9. A cable harness (400) having a line feedthrough (100) according to one or more of the preceding claims.

## Revendications

1. Passage de câble (100) pour le passage de câbles à travers un évidement dans un mur, comprenant :
- un corps (102) pouvant être introduit et logé dans l'évidement, qui comprend une première et une deuxième ouvertures, dans lequel un ou plusieurs câbles peuvent être guidés à travers les première et deuxième ouvertures à travers le corps (102) et dans lequel, au moins au niveau d'une des première et/ou deuxième ouvertures, sont prévus des moyens de logement (106) pour le logement d'un détecteur de direction (104), dans lequel des moyens de positionnement (120) sont prévus, qui limitent un mouvement du passage de câble (100) logé dans l'évidement lorsqu'il est monté, dans la direction du passage et
- un détecteur de direction (104) avec une partie de socle (108) et une partie rotative ou pivotante (140) qui dévie les câbles passés à travers le corps (102) dans une direction déterminée, dans lequel la partie de socle (108) comprend des moyens de fixation (144) pour la fixation sur ou dans le moyen de logement (106), qui relient fermement le détecteur de direction (104) avec le corps (102) au moins dans une direction, qui correspond à un axe de passage (DA) du passage de câble (100) à travers l'évidement, dans lequel la partie rotative ou pivotante (140) du détecteur de direction (104) peut
tourner ou pivoter entre une première et une deuxième positions, dans lequel le détecteur de direction (104) ne dépasse, au moins dans la première position, transversalement par rapport à l'axe du passage (DA), à aucun point, des dimensions extérieures de la partie pouvant être introduite et logée du corps (102), de sorte que, dans la direction d'introduction, devant le corps, il puisse être introduit et passé à travers l'évidement, jusqu'à ce que les moyens de positionnement (120) limitent un déplacement supplémentaire dans la direction du passage et dans lequel la partie rotative ou pivotante (140) ou la partie du socle (108) du détecteur de direction (104) comprend des moyens (150) pour la fixation de la partie rotative ou pivotante (140) dans la deuxième position.

2. Passage de câble (100) selon la revendication 1, avec des moyens de positionnement (120, 122, 123, 124) pour la limitation ou l'empêchement d'un déplacement du passage de câble (100) logé, dans l'état monté, dans l'évidement, autour de l'axe du passage (DA).

3. Passage de câble (100) selon la revendication 1, dans lequel la partie de socle (108) et/ou la partie rotative ou pivotante (140) du détecteur de direction (104) comprennent des moyens d'immobilisation (112, 114) pour l'immobilisation de l'axe de pivotement ou de rotation par rapport au corps (102).

4. Passage de câble (100) selon la revendication 1, dans lequel, à l'intérieur du corps (102) sont prévus des moyens d'étanchéité qui remplissent et étanchéifient l'espace libre entre le ou les câbles (404) guidés à travers le corps (102) et l'intérieur du corps (102) de façon à ce que le passage de corps solides et/ou de fluides à travers le corps (102) soit entravé ou empêché.

5. Passage de câble (100) selon la revendication 1, dans lequel, entre le mur et les moyens de positionnement (120, 122, 123, 124) et/ou la partie du corps (102) logée dans l'évidement du mur, sont prévus des moyens d'étanchéité qui entravent ou empêchent la pénétration de corps solides et/ou de fluides dans l'espace intermédiaire.

6. Passage de câble (100) selon la revendication 1, dans lequel le corps (102) est conçu, au niveau d'une extrémité opposée au détecteur de direction (104), pour le montage d'un dispositif de protection de câble (402).

7. Passage de câble (100) selon la revendication 1, dans lequel le détecteur de direction (104) est conçu, au niveau d'une extrémité distante de la partie de socle (108), pour le montage d'un dispositif de protection de câble (406).

8. Passage de câble (100) selon la revendication 1, dans lequel le corps (102) comprend deux parties reliées entre elles de manière articulée, qui peuvent être mises dans un état ouvert pour l'insertion de câbles (404) et dans un état fermé pour le montage dans l'évidement du mur.

9. Faisceau de câbles (400) avec un passage de câbles (100) selon l'une ou plusieurs des revendications précédentes.
